# EUROPEAN PATENT APPLICATION

(11) **EP 2 383 173 A1**
(43) Date of publication of application: **02.11.2011**
(21) Application number: 11425117.6
(22) Date of filing: 27.04.2011
(51) Int. Cl.: B62J 15/00, B62J 15/02

(54) **Rollable and removable protection system for bicycles**

(30) Priority: 30.04.2010 IT BZ20100016
(71) Applicant: Martorano, Luca, 39100 Bolzano (IT)
(72) Inventor: Martorano, Luca, 39100 Bolzano (IT)

(57) **Abstract**

The present invention is a protective accessory for bicycles, like a fender, which is rollable and removable thus enabling the user to carry it in a bag, in a backpack or in the pocket and, in particular conditions like rain, to rapidly open it and mount it on the bike. Its peculiarity lies in the way it is constructed to be rolled up and extended. With means of a strip (2) specifically conceived to be rolled upon itself and a connecting unit (1) which can house the strip (2) thus enabling it to stay firm when extended and fastened on the bike, this accessory shows the following attributes: highly reduced volume when it is rolled, highly reduced weight when it is in its extended or rolled configuration, short mounting time, complete removability, efficiency and functionality like fixed fenders.

## Description

Description relating to the patent application for an industrial invention called: "rollable and removable protection system for bicycles".

Owner: "Luca Martorano" via Firenze 40, 39100 Bolzano

Inventor: "Luca Martorano" via Firenze 40, 39100 Bolzano

### Technical lnvention field:

The present invention falls within the field of bicycle accessories, i.e. removable protective systems like fenders.

### State of the technique:

In the current bike accessories market there are four kind of protections to protect the rider and his bicycle from water or any material picked up by the wheels from the riding surface:
   1. Fixed fenders, usually used on non professional urban bicycles
   2. Removable fenders, usually used on non professional bicycles for which lightness and simplicity constitute an important prerequisite
   3. Protections for the rider (sportswear) usually for professional purpose
   4. Specific fenders for professional downhill bicycles

Category 2 users tend to emulate the more sophisticated and essential equipments of category 3 riders, namely by giving up unnecessary fenders during tours.

Several removable fenders on the market are based on a simple and ready-to-use system which enables them, when necessary, to be fastened to the bicycles and unfastened very quickly. However, even if they can be mounted in no time, they are rigid plastic protections which usually turn out to be bulky and not easy to be carried if not already mounted on the bike. The user needs to decide in advance before going on a tour whether it is the case to bring them or to do without.

To avoid this inconvenience, many products of this kind are collapsible by means of concentric or linear sliding elements, thus reducing the volume and making them easy to carry separately. Despite being compact, they are technically complex and therefore expensive and, in some cases, even slow to fasten onto the bike. Some versions are provided with a rollable component which can be mounted and stretched when it is needed.

### Cited references:

US5562296 10/1996 S. Warren Hall; Jaquelyn L. O. Hall..................... B62D 25/16

It deals with a bicycle protection which is foldable and can be stored in a case under the bicycle saddle. The rolling principle adopted is similar to that mentioned below but the technique of mounting it onto the bicycle and especially the system used to attach the rollable strip to the connecting unit are completely different.

In this way the here described strip is bigger than what its usage would require, so that it can be stored on the bike only. Therefore, said accessory is permanently located on the bicycle itself.

US5121935 06/1992 Francis X. Mathieu..................... B62D 25/16

It deals with a rollable bicycle protection which can be fastened onto the bike by means of the screw locking the seat post. The rolling principle applied is similar to the one explained below, but also in this case, the way the strip is attached to the connecting unit, which is the most important part of the present invention, is different. Moreover, said accessory is not readily removable without any tools.

US2956795 08/1960 E. E. Foster

It deals with the invention of the elastic spring with spiroid behaviour. The here described mechanical principle is partially mentioned in the present invention.

US5762349 06/1998 Robert M. Gancarz..................... B62D 25/16

It deals with a bicycle protection which consists of a folding sheet which can be fastened under the saddle. Even though it is a different invention, this reference has been chosen because it expresses the same bowing principle applied to the sheet sections, which lends rigidity to the strip used in the present invention.

US6659483 12/2003 Simon Blythe..................... B62D 25/16

It deals with a bicycle fender, partially folding, which shares with the present invention the aim of reducing the product volume.

EP0349646A101/1990 Ostrowiecki Morris..................... B62J 15/00, B62J 1/28

It deals with an invention which is folding along one linear axis.

GB2393166A 03/2004 Tony Hsu...........................B62J 15/00

It deals with a bicycle fender, folding along several concentric bows, which, like the present invention, is completely removable and claims a reduced product volume.

### Detailed description:

The present invention consists of two main mechanical components that can be linked: the first (1) is an element which allows the strip to be fastened onto the bicycle; the second (2) is the strip itself, which, in its operating condition can be stretched thus forming a protective barrier above the wheel. These two elements connected allow two different usage conditions, here below described as transportation condition [X] and
operating condition [Y].

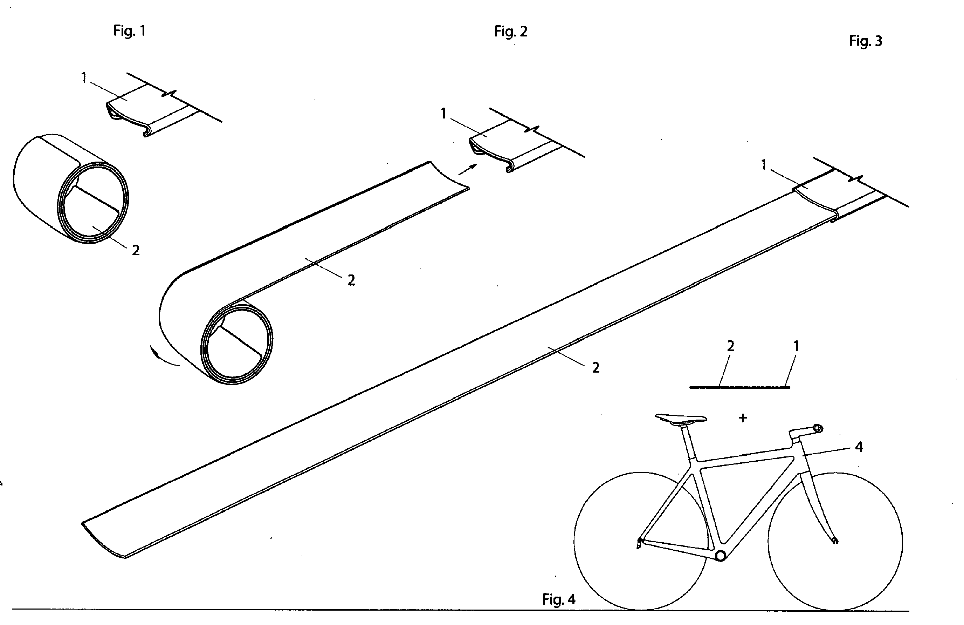

In the transportation condition [X] the strip (2) is rolled upon itself and not inserted in the connecting unit (1) as shown in Fig 1. In this condition the object is compact and can be easily carried in the pocket, in a bag, in a backpack or in a case the bicycle may be equipped with.

In the operating condition [Y] the strip (2) is stretched and inserted in the connecting unit which lends the strip complete rigidity. See Fig 3.

The operations which allow to switch from position [X] to position [Y] are manual (see Fig 2). The steps which allow the opposite, e.g. to switch from position [Y] to position [X] depend on the material chosen.

By using coated spring steel the strip will roll up spontaneously. Just like a spring, this movement is triggered when its balance, due to a curvature the strip is constrained to assume throughout its length when inserted in the connecting unit, is upset. After that the spring steel strip will regain a new balance characterised by its coil configuration. To trigger the spring to roll up the user only has to bend the strip thus upsetting its longitudinal curvature.

If the strip is made of flexible polymer the rolling up will have to be carried out manually.

In any case, the strip (2) is given final stability in the extended condition [X] when one end of it is inserted into the slot of the connecting unit (1). Said slot section is, as a matter of fact, conceived to transmit tension to the strip end being inserted.

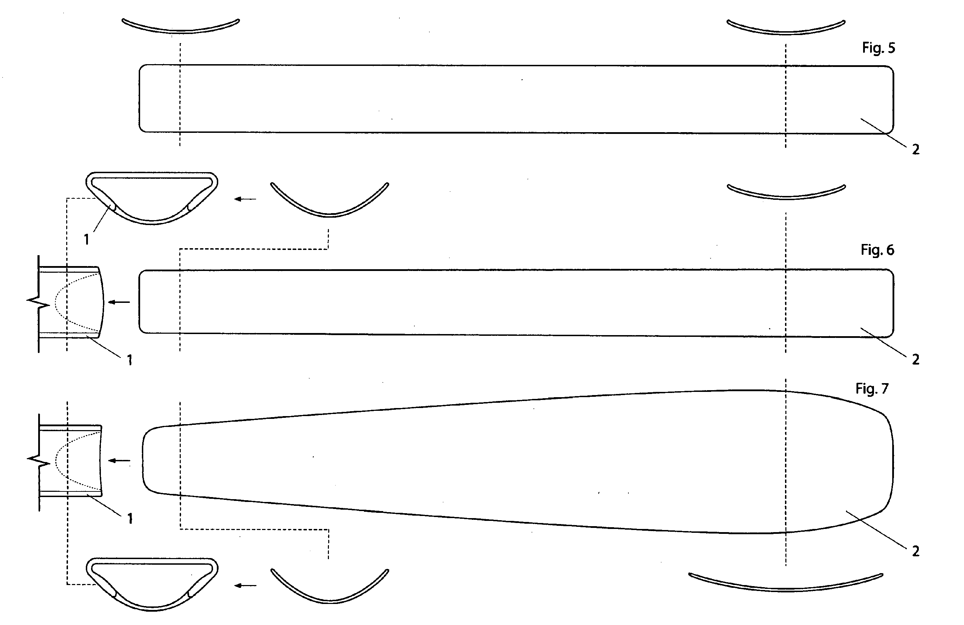

To insert the strip (2) into the slot of the connecting unit (1) (as shown by the arrows in **Fig. 6** and **7**), it is necessary to manually compress the strip section which is going to be inserted into the slot, namely deform it by squeezing its external longitudinal edges towards the centre of the curvature; that compression will generate a flexion of the section which will in turn effect the whole strip throughout its length. In the coupling section the strip will underlie an elastic deformation, namely it will become more bowed than its balance configuration. **Fig.5** shows the strip in its extended condition, and in total balance. **Fig.6** shows the coupling section of the connecting unit (1) and the strip (2); the latter has been illustrated while being inserted into the connecting unit (1) (as shown by the arrow). **lf** we compare the two sections of item (2) in **Fig**. **6**, we will see that the one on the very left, about to be inserted into unit (1), has a smaller radius, higher total height and lower width than the section on the very right. The section on the left is more under strain than its balance state.

Under this circumstance the deformation will be higher right by the coupling section and will gradually decrease towards the opposite free end, thus assuring enough rigidity to the strip while stretched also in its operating condition [Y].

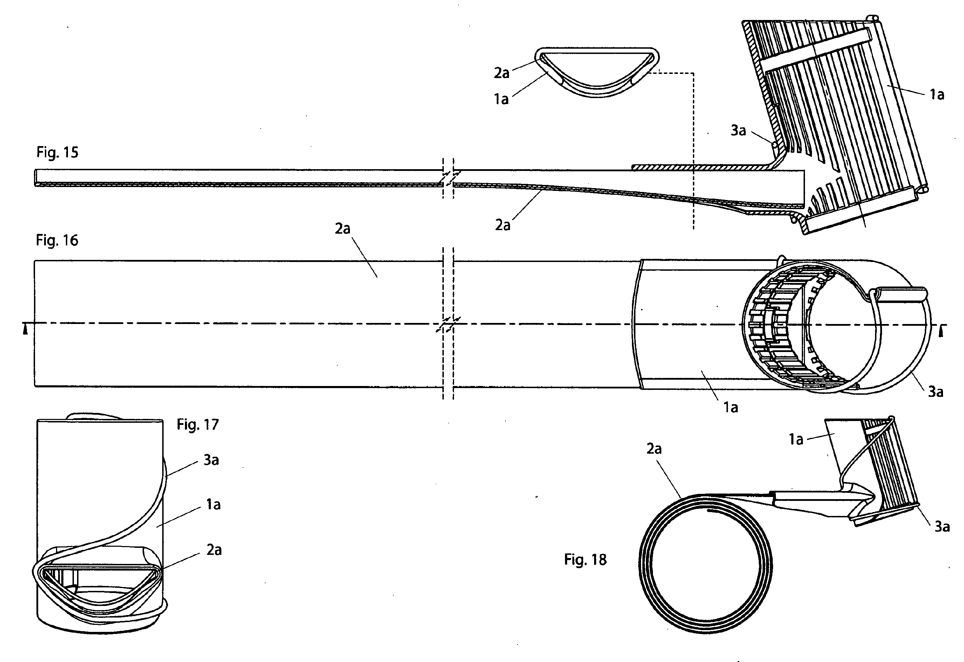

The side walls of the connecting unit (1) will guarantee a constant flexion throughout the interval the strip is inserted, so that an isostatic blocking between the two elements will be ensured and the strip (2) will be prevented from rolling up unexpectedly due to any swaying while riding. The lower edge by the slot on unit (1) shows an emptier structure which can be seen in **Fig. 15**, this prevents it from colliding with the strip curvature once the strip is rolled up.

**Fig. 6** and **7** point out how a variation in the strip shape does not compromise a flexion of the sections, therefore the above described behavior will not change.

**Fig. 8**, **9** and **10** represent a possible application of the above described principle to a rear fender which has a protective function against water or any other material picked up by the rear wheel. The connecting unit (1a) is a variation of the generic connecting unit (1) above described, but specifically designed to be fixed in the back.

In this case it shows a hollow cylindrical body, which, flexible like a clip, enables it to be fixed either on the bicycle (4) vertical tube, or on the seat post. Strip (2a) is a variation of strip (2) applied to the back of the bicycle. A rubber band (3a) can be used to fasten the connecting unit (1a).**Fig**. **11** shows the above described protection system applied to the bicycle.

**Fig**. **12**, **13** and **14** represent the rear fender when it is fully closed. The rubber band (3a) is also used to wrap around the strip (2a) and hold strip and connecting unit (1a) together.

Fig. 15, 16 and 17 represent the rear fender when it is extended. The grooves inside the cylindrical body of the connecting unit (1a) make the cylinder more elastic so that it can adapt to different tube diameters. The C-shaped section on one vertical end makes it easier to fix on the bike by means of the rubber band (3a) (see Fig. 16). Fig. 18 represents another way to use this item during a tour; it can stay mounted on the bike, and in order to take up less space, it can remain rolled up and still inserted in the connecting unit (1a).

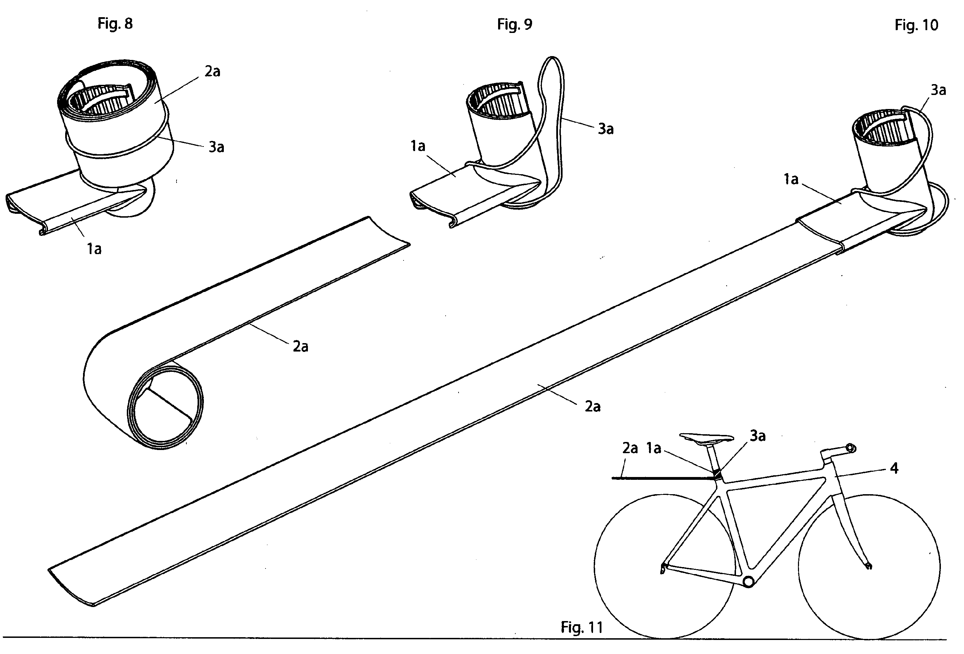

In Fig. 8, 12, 13 and 14 the fender is represented closed and compact. Thanks to the elasticity of the strip (2a), rolled up and wrapped around the connecting unit (1a), and to the rubber band (3a), the two bodies are held together thus forming a single handy object, fit for its transportation condition [X].

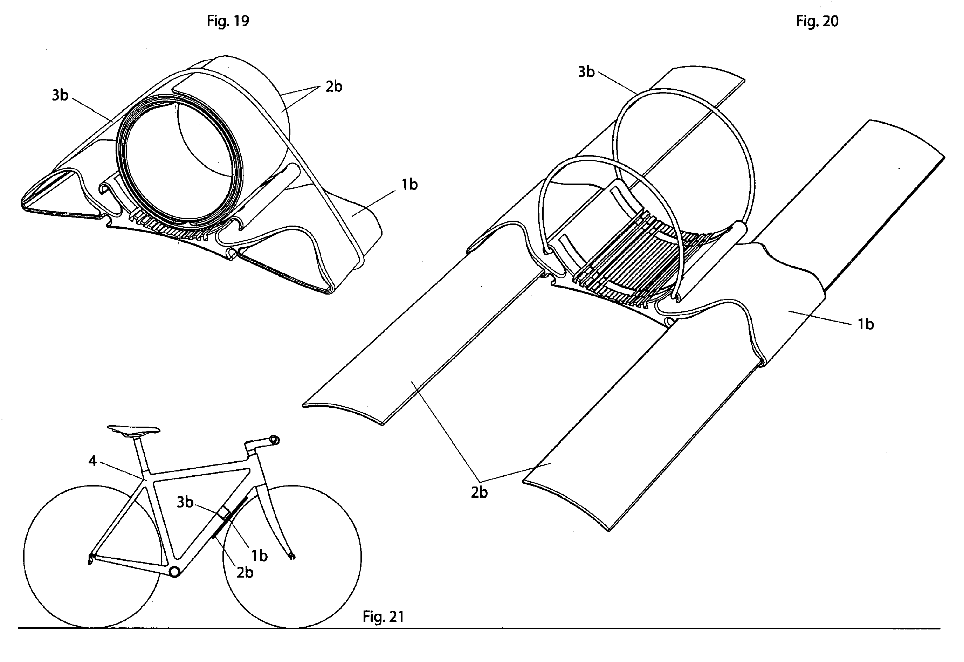

Fig.19 and 20 represent another variation of the above illustrated principle related to conditions [X] and [Y]. Its function is to protect the rider and his bicycle from water or any other material picked up by the front wheel. The connector will be this time the connecting unit (1b) which is provided to mount on the oblique tube of the bicycle (3) (as in Fig. 21). It is constructed to house two identical rollable strips (2b) on its sides. In-between the connecting unit (1b) is fixed onto the oblique tube of the bicycle by means of the rubber band (3b). Also in this case, the connecting unit (1b) is provided with two flexible flaps with an ending C-shaped section which enable the rubber band (11) to be fastened. The longitudinal grooves make the connecting unit (1b) more elastic so that it can adapt to different diameters the oblique tube may have and stay firmly attached to the bicycle (4). Also in this case in the transportation condition [X] the rubber band (3b) will be used to hold the components (1b) and (2b) together once they are removed from the bicycle and collapsed (see Fig. 19).

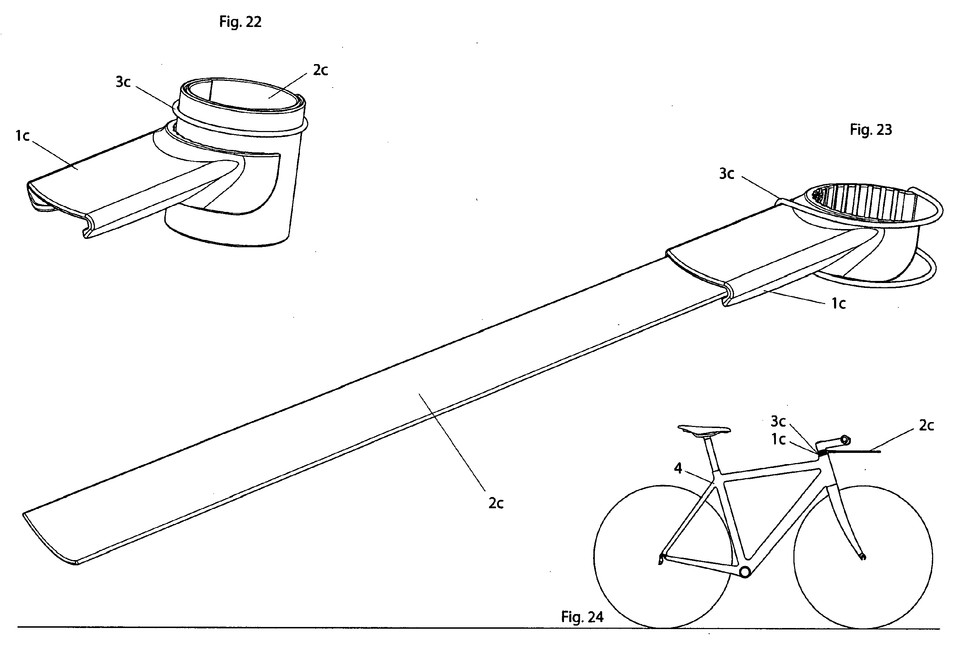

With the same criteria the variation illustrated in Fig. 22 and 23 can also be realised. It is fixed under the handlebar stem of the bicycle (4) (Fig. 24), the connecting unit (1c) housing the protective strip (2c). Unit (1c) is attached to the bicycle tubes by the steering rings where the section is constant. ln the condition [Y] the rubber band (3c) makes the fender stay firm on the bicycle (4), whereas in the condition [X] it guarantees the two pieces (1c) and (2c) are held tight together.

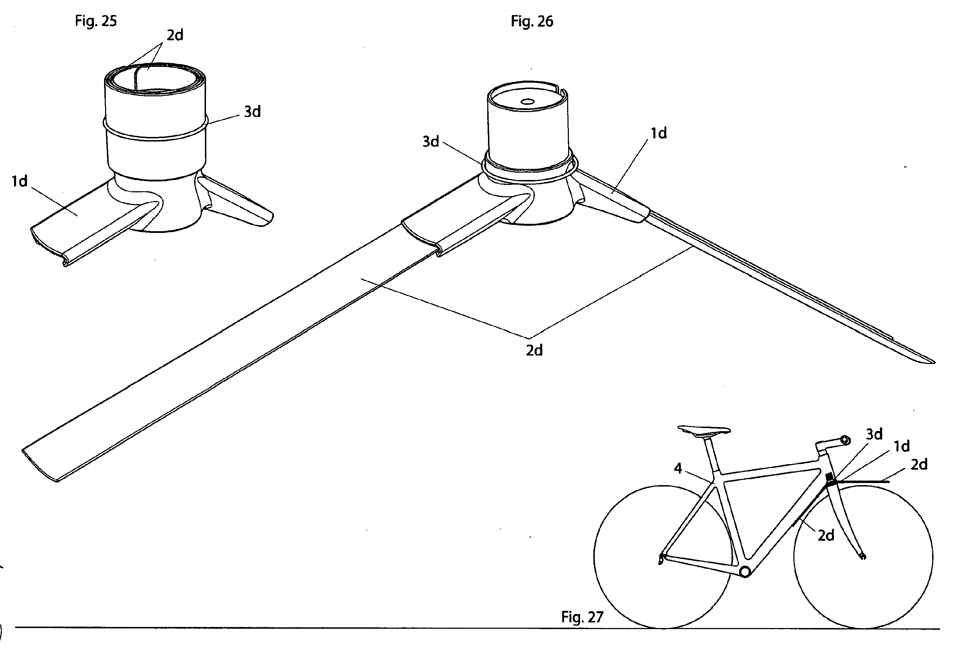

In the same way it is also possible to realise a protection for the front wheel which can be attached under the fork tube. This is not only provided with a front strip but also with an oblique one located in the back (Fig. 25, 26 and 27). The connecting unit (1d) houses two rollable strips of type (2d).

This system is only suitable for bicycles which are provided with enough space between the fork and the rear wheel and it is an alternative to the last two versions previously described.

### Advantages offered by the present invention:

The present invention offers the user following advantages:
   - Reduced volume when collapsed (few _{CM}³)
   - Reduced weight when open as well as closed (around 40 grams)
   - Quick mounting and removal time (up to 20 seconds)
   - Fully removability without affecting the original functionality/appearance of the bicycle
   - Same functionality as fixed fenders.

### Brief description of the drawings:

Fig. 1. Connecting unit (1) and strip (2) rolled.
Fig. 2. Strip being stretched (2) and inserted into the connecting unit (1).
Fig. 3. Strip (2) extended and inserted in the connecting unit (1).
Fig. 4. Generic bicycle (4) with connecting unit (1) and strip (2) both mounted.
Fig. 5. Upper view of the strip (2) in its extended position and sections on its ends.
Fig. 6. Upper view of the strip (2), strip inserted in the connecting unit (1) and main sections.
Fig. 7. Upper view of the strip (2) with alternative shape, strip inserted in the connecting unit (1) and main sections.
Fig. 8, 9, 10 Mounting procedure of the rear fender version (components (4), (8), (10)).
Fig. 11. Generic bicycle (4) with rear fender mounted.

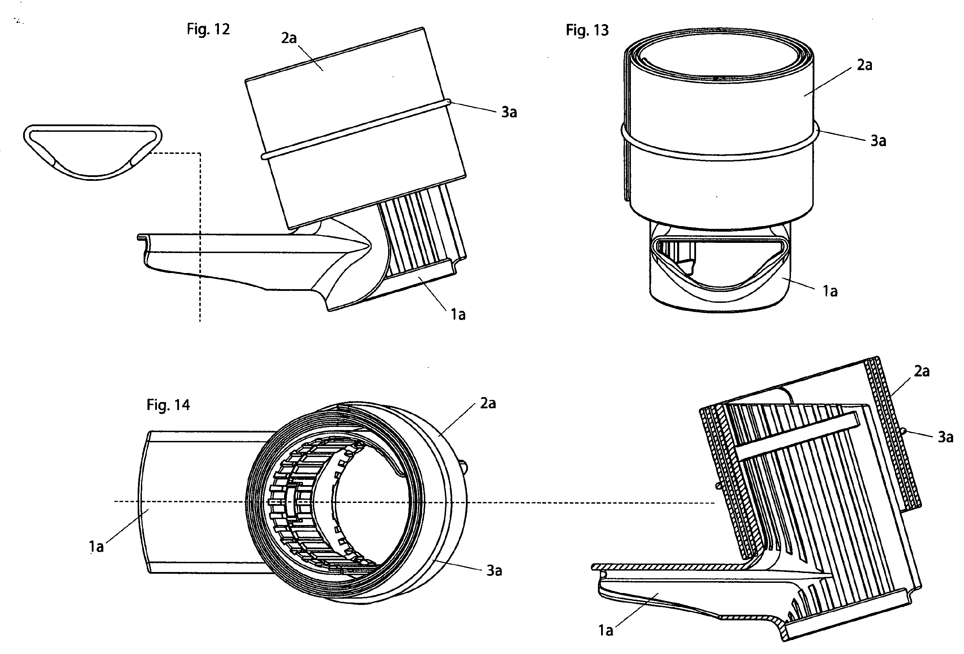

Fig. 12, 13, 14. Side view and section, front and upper view and section of the rear fender version in its transportation condition [X].
Fig. 15, 16, 17. Side section, upper view and section, front view of the rear fender version in its operating condition [Y].
Fig. 18. Side view of the rear fender version for hybrid usage between conditions [X] e [Y].
Fig. 19, 20, 21. Central protection for front wheel of type one in the transportation condition [X], in the operating condition [Y] and mounted on a generic bicycle (4).
Fig. 22, 23, 24. Protection for front wheel of type two in the transportation condition [X], in the operating condition [Y] and mounted on a generic bicycle (4).
Fig. 25, 26, 27. Protection for front wheel of type three in the transportation condition [X], in the operating condition [Y] and mounted on a generic bicycle (4).

### Brief description of the components:

1 generic connecting unit used for connecting the strip (2) to the bicycle (4).
2 generic protective strip, rollable and extendible, used for protecting the rider and his bicycle (4).
3 generic rubber band
4 generic bicycle
1a rear connecting unit used for connecting the strip (2a) to the bicycle (4).
1b central connecting unit used for connecting two strips (2b) to the bicycle (4).
1c front connecting unit used for connecting the strip (2c) to the bicycle (4).
1d front connecting unit for the fork, used for connecting two strips (2d) under the front fork of the bicycle (4).
2a protective strip, rollable and extendible, rear.
2b protective strip, rollable and extendible, central.
2c protective strip, rollable and extendible, front.
2d protective rollable and extendible strip for the fork. 3a rubber band for rear attachment.
3b rubber band for central attachment.
3c rubber band for front attachment.
3d rubber band for the fork, front attachment.

## Claims

1. Protective accessory especially designed for bicycles, like a fender, comprising the following:
- *a connecting unit* corresponding to unit (1) or, according to, its specific applications, to units (1a), (1b), (1c) or (1d); enabling connection between the bicycle (4) and the rollable strip, made up by a part where the strip can be inserted and be blocked, and a part where it can be fixed to the bicycle;
- *a rollable strip,* corresponding to unit (2), or according to its specific applications, to units (2a), (2b), (2c) or (2d), allowing two different positions, rolled up and extended, namely defined as transportation condition [X] and operating condition [Y];
and **characterized by** the fact that in the operating condition [Y], the *rollable strip* is stretched and inserted in the *connecting unit,* which shows a section like in fig. 6 of part (1), housing one end of the strip in its straight and narrow slot. The particular shape of the coupling area pushes the strip section from the sides towards the centre thus keeping it constrained and bowed. In this way, the strip is applied a flexion which gradually spreads along its whole length, so that it is prevented from rolling upon itself, suddenly and in undesired way, while it is being used. Besides, this flexion guarantees more adherence and stability between the strip and the connecting unit while the bicycle is moving.

2. According to claim 1, the present invention is **characterized by** the fact that the *rollable strip* always shows a flat shape when it is rolled, and a curved section, namely a circumference portion, when it is extended [Y]. The latter section characterises the strip in every part of its length before being inserted into the *connecting unit,* or its free end after being inserted.

3. According to claim 1, the present invention shows a coupling between the *connecting unit* and the *rollable strip,* **characterised by** the fact that the flexion applied to the strip when it is inserted in the connecting unit is mainly elastic, namely it forces the strip into bending and curving more than when it is in its static balance condition, thus achieving more stability when extended and giving more solidity to its coupling with the *connecting unit* during the fulfilment of its protective function (operating condition [Y]). After the strip is taken off the connecting unit it reassumes its balance condition. An ellipse-like edge along the lower side of the connecting unit prevents it from getting into contact with the strip, where it is most rounded and can more easily bend while the bike is moving, thus avoiding a sudden or undesired rolling up.

4. According to claim 1, the present invention is made up by a *connecting unit,* which enables the fender to be easily removed from the bike when it is in its transportation condition [X], thus leaving the bicycle without any fender component. Said operation does not require any tool and can be carried out within 5 seconds approximately.

5. According to claim 4, the rapid and complete removal of the *connecting unit* depends on its shape, namely the part of the connecting unit used to be fastened to the bike tubes is **characterized by** a portion of hollow cylinder (more or less complete and more or less tall depending on the specific applications (1a-1d)) with a variable thickness and an inner surface which is grooved forward the tube axis upon which it is fixed. In this way, this kind of shape allows great elasticity, so that the fender can be adapted to different diameters and shapes of the tube, thus sticking to it with converging strength like a clip. By pushing the open section of the cylinder against the tube, the connecting unit will get fastened, whereas by pulling it in the opposite direction it can be removed.

6. According to claims 1, the present invention is **characterized by** a *connecting unit* which works as a housing bracket for the *rollable strip* while it is in its extended status (operating condition [Y]), as well as when it is coiled (transportation condition [X]). Also in the latter condition, the object shows up as an integral single body where the main coupling is made up by a friction between the spring coils and the bike anchoring cylinder on the *connecting unit.*

7. According to claims 5 and 6, one can use an *elastic ring,* which, according to the specific applications, is called (3a), (3b), (3c) or (3d). It serves to solidly fix the *connecting unit* to the bicycle frame in the operating condition [Y], thus contributing to fix even more solidly the connecting unit to the *rollable strip* when it is rolled up on itself into a spiral in the transportation condition [X].

8. According to claim 7, at least one end of the cylinder portion housing the tube on the *connecting unit* has a section "C" which enables the *elastic ring* to be fixed to the connecting unit.

9. According to claim 1, the present invention has a *connecting unit* which can house an end of the *rollable strip* also when it is coiled upon itself. In this way, the object can be used in a hybrid condition between the transportation condition [X] and the operating condition [Y]; so the strip can be mounted on the bicycle without obstructing any space above the wheel.

10. According to claim 1, the present invention has a *connecting unit* which, in some applications, can house two *rollable strips,* separate and paired up or lined up.
